(19) Europäisches Patentamt
European Patent Office
Office européen des brevets

(11) EP 0 780 623 A1

(12) DEMANDE DE BREVET EUROPEEN

(43) Date de publication:
25.06.1997 Bulletin 1997/26

(51) Int Cl.$^6$: F17C 13/12

(21) Numéro de dépôt: 96402818.7

(22) Date de dépôt: 19.12.1996

(84) Etats contractants désignés:
DE ES FI FR IT

(30) Priorité: 21.12.1995 FR 9515285

(71) Demandeur: CHANTIERS DE L'ATLANTIQUE
75116 Paris (FR)

(72) Inventeurs:
• Courtay, Roger
44410 Herbignac (FR)
• Jehanno, Michel
44600 St Marc S/MER (FR)

(74) Mandataire: Gosse, Michel
c/o ALCATEL ALSTHOM,
Département de Propriété Industrielle,
30, avenue Kléber
75116 Paris (FR)

(54) **Cuve équipée de moyens de détection de fuite**

(57) La cuve (1) est isolée thermiquement et contient un liquide à basse température, elle est équipée de moyens pour détecter une fuite. Ces moyens comprennent une fibre optique (2) qui chemine sur les parois de la cuve, dans son isolation et elle est associée à des moyens optoélectronique permettant de mesurer la température en tout point de la fibre en utilisant l'effet RAMAN.

FIG. 1

## Description

La présente invention concerne une cuve équipée de moyens de détection de fuite.

L'invention s'applique en particulier aux cuves contenant du gaz liquifié par exemple aux cuves des navires méthaniers.

Actuellement, dans les cuves de méthanier du type à deux parois métalliques minces, l'une interne, appelée membrane primaire et l'autre externe, appelée membrane secondaire, séparées par une première isolation et soutenues à travers une seconde isolation par la structure adjacente de la coque du navire, il est connu de placer des capteurs de température sur la membrane secondaire et sur la coque pour savoir s'il existe des gradients anormaux de température indicateurs de fuite.

Une dizaine de capteurs de température sont ainsi placés en différents endroits de la membrane secondaire. Ces capteurs sont installés en double, pour pallier les défaillances éventuelles et sont reliés à des alarmes sonores et visuelles qui se déclenchent lorsque la température est inférieure à - 110°C.

Il est prévu en outre une détection de fuite de méthane dans la première et la seconde isolation en utilisant des analyseurs infrarouge dont les points de prélèvement sont raccordés cycliquement aux analyseurs (2 par cuve).

Le nombre limité de points de température sur l'ensemble de la surface de chaque cuve ne permet pas d'obtenir une cartographie des températures suffisamment fine pour localiser la fuite éventuelle.

Quant aux analyseurs d'infrarouge dont le système d'échantillonnage est cyclique, l'importance des volumes des espaces de la première et de la seconde isolation et le faible débit d'aspiration de la pompe ne permettent pas d'obtenir rapidement une mesure représentative de la fuite en termes de limite inférieure d'explosivité.

La présente invention propose un moyen simple, efficace et précis permettant de surveiller à tout instant l'étanchéité d'une cuve isolée et de détecter et localiser une éventuelle fuite.

L'invention a ainsi pour objet une cuve équipée de moyens de détection de fuite, ladite cuve étant destinée à contenir un fluide à une température différente de celle du milieu externe, et comprenant une paroi interne équipée extérieurement d'une isolation thermique, caractérisée en ce qu'une fibre optique chemine au sein de ladite isolation et en ce qu'elle comprend des moyens pour envoyer dans la fibre optique des impulsions lumineuses monochromatiques séquentielles, des moyens pour analyser temporellement, après chaque impulsion émise, le flux lumineux rétrodiffusé par la fibre provoqué par ladite impulsion et contenant, selon l'effet RAMAN, des raies stockes et anti-stockes, lesdits moyens fournissant un signal en fonction du temps constituant une image de la température de la fibre sur toute sa longueur, et des moyens d'exploitation du signal indiquant une zone de fuite en cas de détection d'une température anormale dans une portion déterminée de ladite fibre optique.

On va maintenant donner la description d'un exemple de mise en oeuvre de l'invention en se reportant au dessin annexé dans lequel :

La figure 1 est une représentation schématique d'une cuve parallélépipédique montrant le cheminement d'une fibre optique sur ses faces permettant la détection d'une fuite.

La figure 2 est une vue partielle en coupe montrant, dans un exemple particulier, la section d'une cuve d'un navire méthanier et l'emplacement de la fibre optique au sein de l'isolation.

La figure 3 est un agrandissement du détail III de la figur 2.

La figure 4 est un agrandissement du détail IV de la figure 2.

La figure 5 est une vue semblable à celle de la figure 2 mais dans une autre technique de constitution de la cuve.

La figure 6 est un agrandissement du détail VI de la figure 4.

La figure 7 est un schéma fonctionnel des moyens permettant l'utilisation de la fibre comme détecteur de fuite.

La figure 8 est une variante d'une partie de la figure 6.

L'invention consiste ainsi dans l'application à la recherche d'une fuite, d'une cuve contenant un fluide à une température différente de celle du milieu externe, d'un principe connu appelé l'effet RAMAN.

L'effet RAMAN consiste en ce que lors de l'émission d'une lumière monochromatique, les molécules qui reçoivent les photons émis réémettent l'énergie lumineuse avec ou sans transfert d'énergie : Ainsi, si l'on analyse à l'aide d'un spectrographe la lumière transmise par le système optique, on observe

1°) une raie "non déplacée" de fréquence égale à la fréquence initiale des photons émis, c'est la diffusion sans transfert d'énergie appelée diffusion Rayleigh

2°) deux séries de raies : raies stockes et anti-stockes symétriques de part et d'autre de la raie non déplacée. Le déplacement de la raie est caractéristique de la nature du matériau. Pour la silice, on a $\Delta F \approx 450 \text{ cm}^{-1}$

avec

$$\nu \approx \frac{F}{C}$$

F étant la fréquence
C la vitesse de la lumière dans le vide
$\nu$ est le nombre d'oscillations par centimètre.

La raie anti-stockes $\nu_a$ est à une fréquence supérieure à celle de la fréquence initiale d'émission et la raie stockes $\nu_s$ est à une fréquence inférieure à celle de la fréquence initiale d'émission.

Le rapport R du nombre de molécules émettant une raie stockes au nombre de molécules émettant une raie anti-stockes ne dépend que de la température T.

Ainsi, si l'on envoie dans une fibre optique une lumière monochromatique et que l'on observe le flux lumineux rétro-diffusé, on peut mesurer l'intensité lumineuse correspondant à la raie anti-stockes $\nu_a$ ainsi que l'intensité lumineuse correspondant à la raie stockes $\nu_s$ et le rapport de ces valeurs est caractéristique, pour une nature donnée de fibre optique, de sa température.

En envoyant des impulsions lumineuses séquentielles de très courte durée dans la fibre et en effectuant, après chaque impulsion, l'analyse du flux lumineux rétrodiffusé par la fibre, on peut, compte tenu de la vitesse de propagation de la lumière dans la fibre, connaître la température de la fibre en tout ses points avec une bonne résolution.

Ainsi, on émet par exemple une impulsion lumineuse monochromatique de fréquence fixée pendant une durée $\Delta t$. Cette impulsion va exciter toute la fibre qui va émettre les raies stockes et anti-stockes et, par une sélection temporelle du signal diffusé, on va analyser chacune des zones de la fibre : l'effet produit à une distance d sera perçu au niveau du détecteur (situé du côté de la même extrémité de la fibre que le laser émetteur de l'impulsion) n au bout d'un temps $t = 2d\frac{n}{c}$. n étant l'indice de la fibre optique : $n \approx 1,5$ pour la silice.

Ainsi, la résolution spatiale de la mesure est donnée par la longueur de fibre parcourue par la lumière pendant la durée de l'impulsion émise $\Delta t$ soit :

résolution spatiale $\Delta x = \frac{c}{n} \Delta t$
si l'impulsion émise a une durée $\Delta t$ de 10 ns
on obtient une résolution spatiale $\Delta x$ de :

$$\Delta x = \frac{3.10^8}{1,5} \times 10^{-8} = 2 \text{ mètres}$$

Ainsi, après avoir envoyé une impulsion de 10 n.s et compte tenu du fait que la mesure est effectuée du côté de la même extrémité de la fibre que celle par laquelle l'impulsion a été émise, la distance à parcourir pour l'aller et le retour est donc le double, on effectuera donc la mesure toutes les 20 ns. Ainsi, pour "ausculter" complètement une fibre de 5 km, il faudra $\frac{5000}{2} \times 20 \text{ns}$ $= 5.10^{-5}$s. On pourra alors envoyer une nouvelle impulsion.

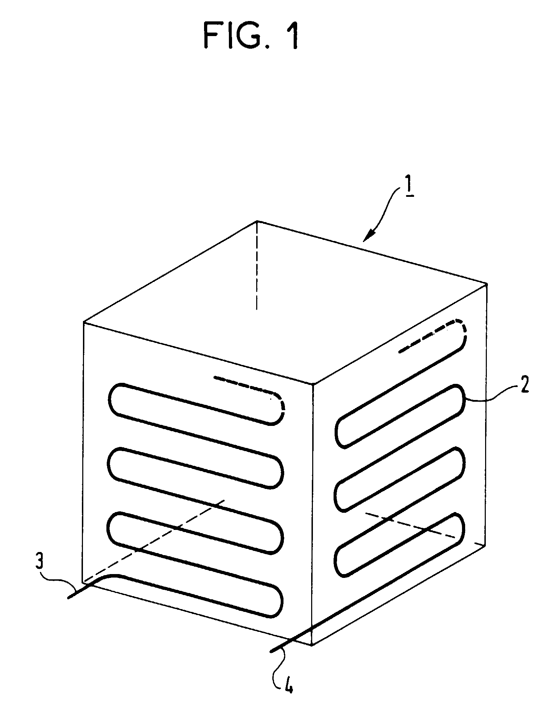

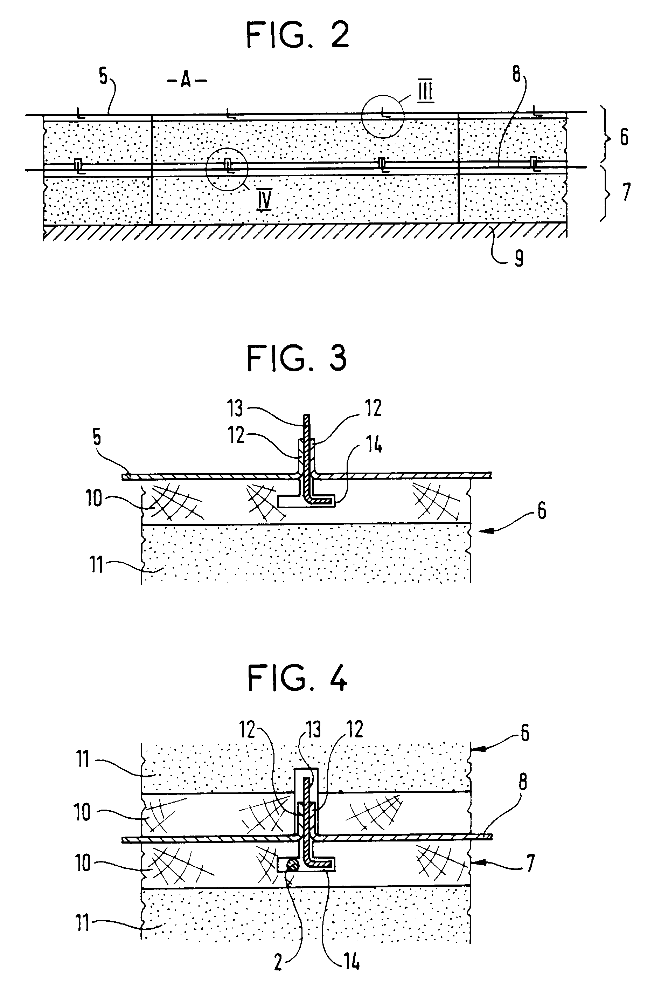

Ainsi, la figure 1 représente schématiquement une cuve parallélépipédique 1. Il s'agit par exemple d'une cuve d'un navire méthanier contenant du méthane liquide à -163°C. Bien entendu les parois sont isolées et deux exemple de structure de parois isolées sont données respectivement aux figures 2,3,4 et 5,6. La fibre optique 2 chemine au sein de l'isolation d'une façon continue sur les six faces de la cuve 1. Pour la clarté de la figure 1 le cheminement n'a été réprésenté que partiellement et les extrémités de la fibre sont repérées 3 et 4.

La distance séparant l'aller et le retour d'un méandre du cheminement de la fibre est par exemple de 1,50 mètres. La longueur totale est par exemple de 5,5 km.

Une configuration de câble utilisable serait par exemple constituée d'une fibre optique comprenant :

- un coeur de 50 μm en Silice
- une gaine de 125 μm en Silice
- un revêtement polyamide
- une gaine extérieure en acier inox soudée au laser

Le poids de l'ensemble est de 3 kg/Km.

La figure 2 montre la section d'une cuve de navire méthanier : le méthane liquide est situé du côté indiqué A. La cuve comprend une paroi interne 5 constituant une barrière primaire. Elle est constituée par un assemblage soudé de bandes métalliques minces. Il s'agit d'un alliage d'acier au Nickel appelé "invar" ayant un coefficient de dilatation pratiquement nul.

Vient ensuite une isolation thermique divisée en deux parties : une isolation primaire 6 et une isolation secondaire 7 séparées par une barrière secondaire 8 identique à la barrière primaire 5. L'ensemble est soutenu par la coque 9 en acier.

L'isolation primaire 6, ainsi que l'isolation secondaire 7 est constituée par un assemblage de caissons en contreplaqué 10 remplis d'un isolant pulvérulent 11 appelé "Perlite". Sur la figure 3, on voit l'assemblage de deux bandes consécutives de la barrière secondaire 8 effectué par soudure : on soude ensemble le bord recourbé 12 de deux bandes consécutives et une languette 13 à section en L enfilée dans une rainure en T14 effectuée dans le caisson en contreplaqué 10. Le rôle de la languette 13 est de permettre d'appliquer la barrière secondaire 8 contre l'isolation 7 en tirant la languette 13 vers le haut pendant que l'on appuie sur la barrière secondaire 8 et que l'on effectue la soudure électrique.

La fibre optique 2 chemine le long des parois dans les rainures en T14 juste au dessous de la barrière secondaire 8.

La figure 4 montre de la même façon l'assemblage des bandes formant la barrière primaire 5.

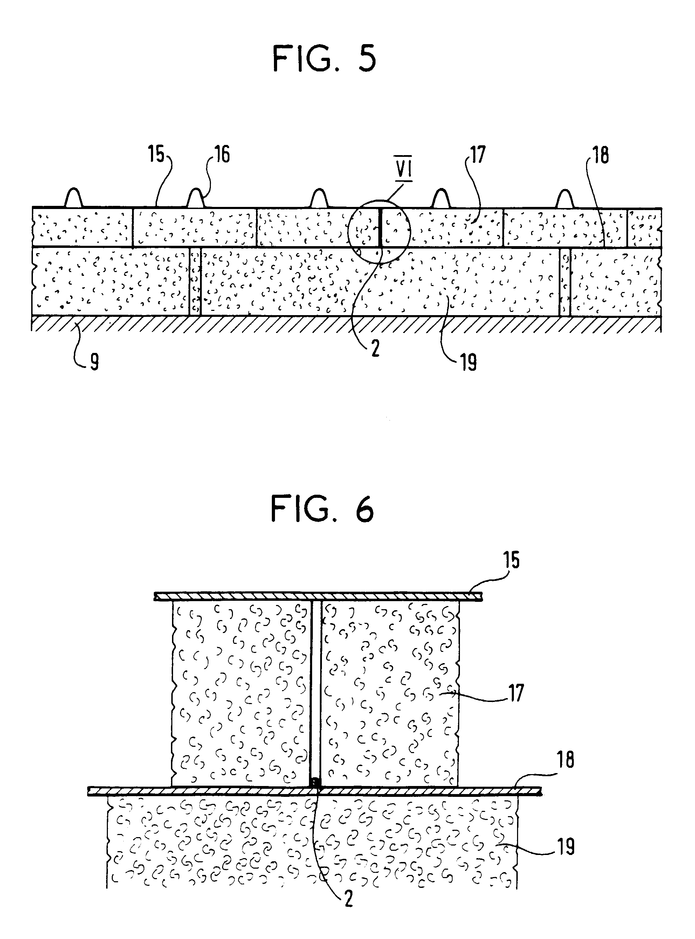

Les figures 5 et 6 montrent une autre technique de constitution de la cuve. Elle comprend également une barrière primaire métallique 15 mais en acier inoxydable et comportant des ondulations 16 pour les dilatations, une isolation primaire 17 faite de panneaux de mouse isolante, une barrière secondaire 18 et une isolation secondaire 19 faite également de panneaux de mousse isolante. L'ensemble est également supporté par la coque 9. La fibre 2 est située au niveau de l'isolation primaire 17 juste au-desus de la barrière secondaire 18 entre deux panneaux de mousse isolante.

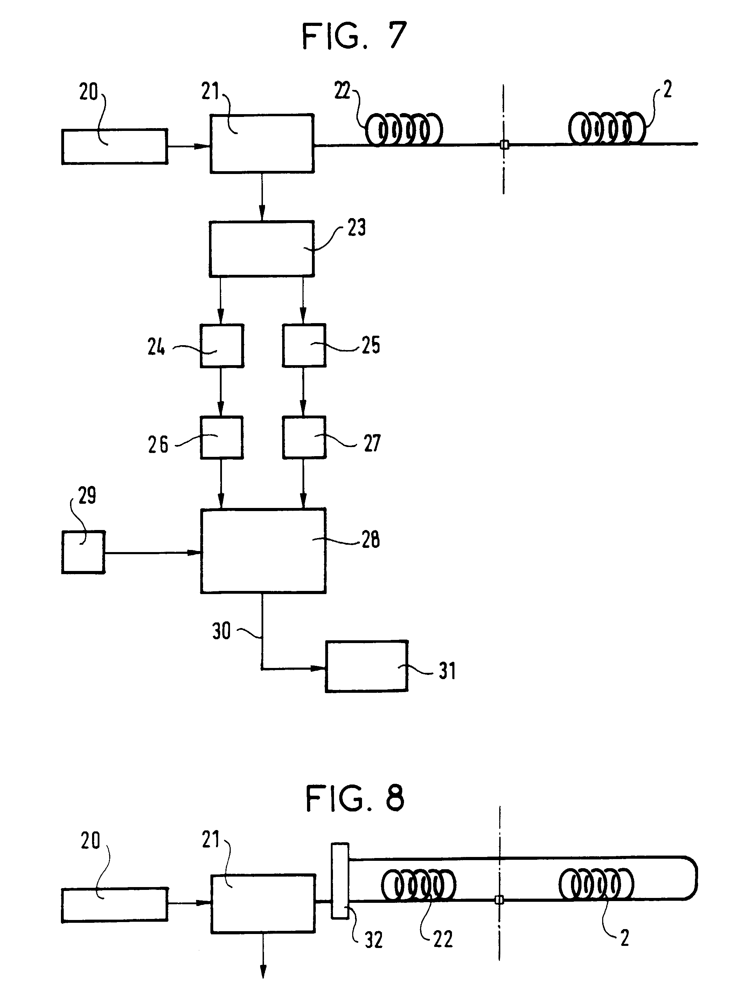

La figure 7 est un schéma bloc fonctionnel du dispositif de mesure.

Il comprend un émetteur laser 20 émettant des impulsions monochromatiques de longueur d'onde λe. Vient ensuite un coupleur 21 ayant pour but d'orienter le faisceau laser à l'aller vers une fibre optique de référence 22 à température connue et servant à étalonner l'appareil, puis vers la fibre optique 21 et au retour à orienter la lumière rétro-diffusée vers un filtre optique 23 ayant pour fonction de séparer les raies stockes et anti-stockes de longueur d'onde respectives $\lambda_1$ et $\lambda_2$ envoyées respectivement vers des détecteurs 24 et 25 travaillant respectivement sur ces longueurs d'ondes.

Le signal lumineux à la sortie de ces détecteurs est envoyé vers un convertisseur optique/électrique respectivement 26 et 27. Les signaux électriques 28 et 29 en sortie de ces convertisseurs, respectivement proportionnels à l'intensité lumineuse émise à la longueur d'onde $\lambda_1$ (raie stockes) et $\lambda_2$ raie (anti-stockes) sont envoyées vers un micro processeur 28, cadencé par une horloge 29, qui effectue le rapport de ces signaux. On obtient en sortie 30 un signal dans le temps représentant la température des tronçons successifs de la fibre 2.

Ce signal est traité dans un PC 31.

Ainsi, un tronçon de fibre 2 anormalement froid indique une fuite. Compte tenu de la géographie du cheminement de la fibre 2 sur les faces de la cuve 1, le PC peut indiquer les coordonnées de la zone concernée.

La figure 8 est une variante dans laquelle un commutateur optique 32 permet d'accéder alternativement aux deux extrémités de la fibre :

Une impulsion sur deux, ainsi que le flux rétro-diffusé, est envoyé (et reçu) par une extrémité et la suivante par l'autre extrémité.

Cela permet d'effectuer la mesure même en cas de coupure de la fibre.

On a donné plus haut un exemple de constitution d'une fibre, on peut aussi utiliser deux fibres telles que définies, dans la gaine extérieure. On peut ainsi dans le cas de l'utilisation d'un commutateur optique 32 analyser les températures de chacune des fibres à partir de leurs deux extrémités. Ainsi, pour chaque point de mesure il y a quatre possibilités de mesure indépendantes ce qui est un gage de disponibilité en cas de rupture de fibres.

**Revendications**

1. Cuve (1) équipée de moyens de détection de fuite, ladite cuve étant destinée à contenir un fluide à une température différente de celle du milieu externe, et comprenant une paroi interne (5, 15) équipée extérieurement d'une isolation thermique (6,7 - 17,19), caractérisée en ce qu'une fibre optique (2) chemine au sein de ladite isolation et en ce qu'elle comprend des moyens (20) pour envoyer dans la fibre optique des impulsions lumineuses séquentielles, des moyens (21 à 29) pour analyser temporellement, après chaque impulsion émise, le flux lumineux rétrodiffusé par la fibre provoqué par ladite impulsion et contenant, selon l'effet RAMAN, des raies stockes et anti-stockes, lesdits moyens fournissant un signal (30) en fonction du temps constituant une image de la température de la fibre sur toute sa longueur, et des moyens (31) d'exploitation du signal indiquant une zone de fuite en cas de détection d'une température anormale dans une portion déterminée de ladite fibre optiqe (2).

2. Cuve selon la revendication 1, caractérisée en ce que ledit fluide est un gaz liquéfié.

3. Cuve selon l'une des revendications 1 ou 2, caractérisé en ce que lesdits moyens (28) pour analyser ledit flux lumineux rétrodiffusé effectuent le rapport de l'intensité lumineuse rétrodiffusée à une fréquence correspondant aux raies stockes à l'intensité lumineuse rétro-diffusée à une fréquence correspondant aux raies anti-stockes.

4. Cuve selon l'une des revendications 1 à 3, caractérisée en ce que lesdites impulsions lumineuses sont alternativement envoyées par une extrémité de la fibre puis par une autre, par l'intermédiaire d'un commutateur optique (32) permettant également de recevoir le flux rétro-diffusé alternativement par une extrémité puis par l'autre.

5. Cuve selon l'une des revendications 1 à 4, comprenant une paroi interne métallique mince appelée barrière primaire (5, 15), équipée extérieurement d'une isolation thermique décomposée en une isolation primaire (6, 17) adjacente à ladite barrière primaire et en une isolation secondaire (7, 19), l'isolation primaire et l'isolation secondaire étant séparées par une barrière secondaire (8, 18), métallique, caractérisée en ce que ladite fibre optique (2) chemine au sein de ladite isolation au voisinage du niveau de ladite barrière secondaire (8, 18).

6. Cuve selon la revendication 5, caractérisée en ce qu'elle fait partie d'un navire méthanier dont la coque (9), directement au contact de l'isolation secondaire (7, 19) lui sert de soutien.

# FIG. 1

# FIG. 2

# FIG. 3

# FIG. 4

EP 0 780 623 A1

# FIG. 5

# FIG. 6

7

# FIG. 7

# FIG. 8

**Office européen des brevets**

# RAPPORT DE RECHERCHE EUROPEENNE

Numéro de la demande

EP 96 40 2818

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | PATENT ABSTRACTS OF JAPAN vol. 016, no. 468 (P-1429), 29 Septembre 1992 & JP 04 168335 A (FUJIKURA LTD), 16 Juin 1992, * abrégé * --- | 1-6 | F17C13/12 |
| Y | FR 2 220 039 A (MITSUBISHI HEAVY IND LTD) 27 Septembre 1974 * revendications; figures * ----- | 1-6 | |
| | | | **DOMAINES TECHNIQUES RECHERCHES (Int.Cl.6)** F17C |

Le présent rapport a été établi pour toutes les revendications

| Lieu de la recherche | Date d'achèvement de la recherche | Examinateur |
|---|---|---|
| LA HAYE | 21 Mars 1997 | Meertens, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)